# EUROPEAN PATENT SPECIFICATION

(11) **EP 1 460 731 B1**
(45) Date of publication and mention of the grant of the patent: **15.08.2007**
(21) Application number: 03425180.1
(22) Date of filing: 21.03.2003
(51) Int. Cl.: H01R 13/703, B62J 39/00

(54) **Units for controlling the operating functions of a cycle**
Einheiten zur Steuerung der Betriebsfunktionen eines Fahrrads
Eléments pour controler les fonctions d'utilisation d'une bicyclette

(43) Date of publication of application: 22.09.2004
(73) Proprietor: CAMPAGNOLO S.R.L., I-36100 Vicenza (IT)
(72) Inventor: Guderzo, Gianfranco, I-36071 Arzignano (Vicenza) (IT)
(74) Representative: Riccardi, Elisa

(56) References cited:
- EP-A- 1 238 902
- DE-A- 3 203 845
- FR-A- 2 609 578
- FR-A- 2 678 781
- GB-A- 2 056 684
- US-A- 4 037 186
- US-A1- 2001 027 495
- PATENT ABSTRACTS OF JAPAN vol. 1998, no. 09, 31 July 1998 (1998-07-31) & JP 10 112358 A (SANYO ELECTRIC CO LTD), 28 April 1998 (1998-04-28)

## Description

### Field of the invention

The present invention relates to control systems for cycles and has been developed with particular attention to competition bicycles. The reference to this possible application, and in particular to the application to racing bicycles, is not, however, to be meant in any way as limiting the possible field of application of the invention.

### Description of the prior art

In the cycle field, over the last few years there has developed the tendency to provide electronic control systems to which different functions are delegated. Such electronic control systems are thus designed for receiving and processing the information gathered by sensors of different sorts, for obtaining information on the operation/running conditions of the cycle.

These electronic control systems are also designed for enabling the user to control actuators of different sorts for modifying, according to given criteria and by acting both in an automatic way and via specific commands issued by the user, the aforesaid operation/running conditions of the cycle. In particular, the technique is known of controlling the gear shift and the derailleur shift of a cycle by means of electrical actuators.

For the need to process and supply to the user information on the conditions of operation/running of the cycle, said control systems are provided with display units.

These display units contain a processor with storage capacity, the so-called cycle computer, in which there is stored information, which may comprise sensitive information regarding the user.

It is, therefore, useful to realize said display units removable, i.e., so that they can be separated from the electronic control system of the cycle.

A system for controlling the operating functions of a cycle of this sort is known, for instance, from the Italian patent application T02000A000293 and corresponding US 2001/0027495A1 in the name of the present applicant.

In the above known control systems, when the display unit is removed, however, the remaining units carrying out the control system remain fixed on the cycle and, in particular, the electrical connection points present on said "fixed" units for enabling removable connection to the display unit remain exposed and unprotected from water, dust, impact, and tampering.

Such elements may jeopardize operation of the system and contribute to discharging the batteries of the units. Furthermore, the exposure of said contacts to the external environment may lie at the basis of phenomena of electrostatic shock, which are able to jeopardize operation of sensitive components, such as microprocessors comprised in the system.

FR-A- 2 609 578 discloses a security plug and socket wherein a switch is arranged across each non earth conductor of the socket. A relay for driving the switch, and a reed switch for driving the relay are further provided in the socket. A magnet for driving the reed switch is provided in the plug.

### Object and summary of the invention

The object of the present invention is to overcome the drawbacks outlined above and to propose a solution that will enable insulation of the connection points that remain exposed in a system for controlling the operating functions of a cycle when a removable part is removed.

According to the present invention, such an object is achieved by means of a system for controlling the operating functions of a cycle having the features recalled specifically in the claims that follow.

Basically, the solution according to the invention foresees for equipping at least one of the units of the system with elements for interrupting electrical continuity, suitable for intervening in the presence of the removal of a unit of the system.

### Brief description of the annexed drawings

The invention will now be described, purely by way of non-limiting example, with reference to the annexed drawings, in which:
- Figure 1 represents a schematic circuit diagram of a system for controlling the operating functions of a cycle according to the invention in a first configuration of operation;
- Figure 2 represents a partial schematic circuit diagram of a system for controlling the operating functions of a cycle according to the invention in a second configuration of operation; and
- Figures 3 and 4 represent, according to modalities substantially similar to those adopted in Figures 1 and 2, a variant embodiment of the solution described herein.

### Detailed description of embodiments of the invention

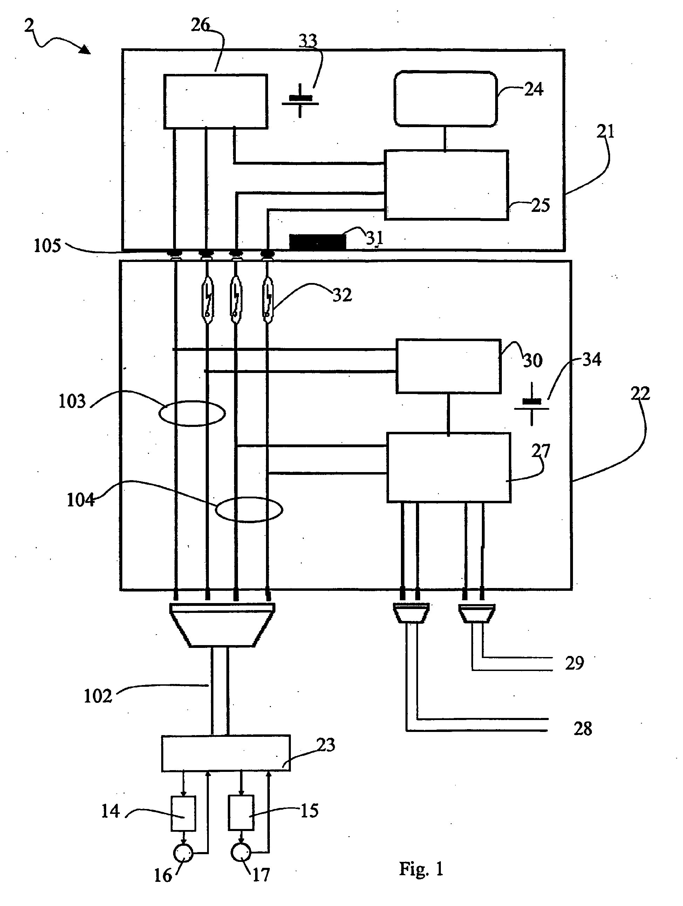

Figure 1 illustrates a partial block diagram of a system 2 for controlling the operating functions of a cycle (not shown in the drawings).

In general terms, such a system according to the preamble of claim 1 is described in the document TO2000A000293 and in corresponding US 2001/0027495 A1.

The system 2 comprises a display unit 21, a control unit 22, and a power unit 23.

Among these, the control unit 22 and the power unit 23 are mounted on the cycle in conditions of stable assembly, i.e., in a "fixed" position. The display unit 21 is, instead, configured so as to be selectively removable from the cycle.

The power unit 23 provides for management of the positioning requests for the gearshift and for the derailleur, controlling the operation of a gear-shift actuator 14 and a derailleur-shift actuator 15, which are associated to respective position transducers 16 and 17.

Said position transducers 16 and 17 provide the information on the position of the gearshift and of the derailleur-shift to the power unit 23 so as to enable optimal control of the actuators 14 and 15 and execution of procedures, such as zero-setting of the position of the actuators and compensation of drifts or offsets of the position.

The power unit 23 supplies the control unit 22 by means of a connection 102 coming under a supply bus 103, with associated a communication bus 104.

In addition, a connection 105 extends the buses 103 and 104 to the display unit 21.

The connection 105 is decouplable, i.e., it is detachable, to enable removal of the display unit 21, separating it from the rest of the system.

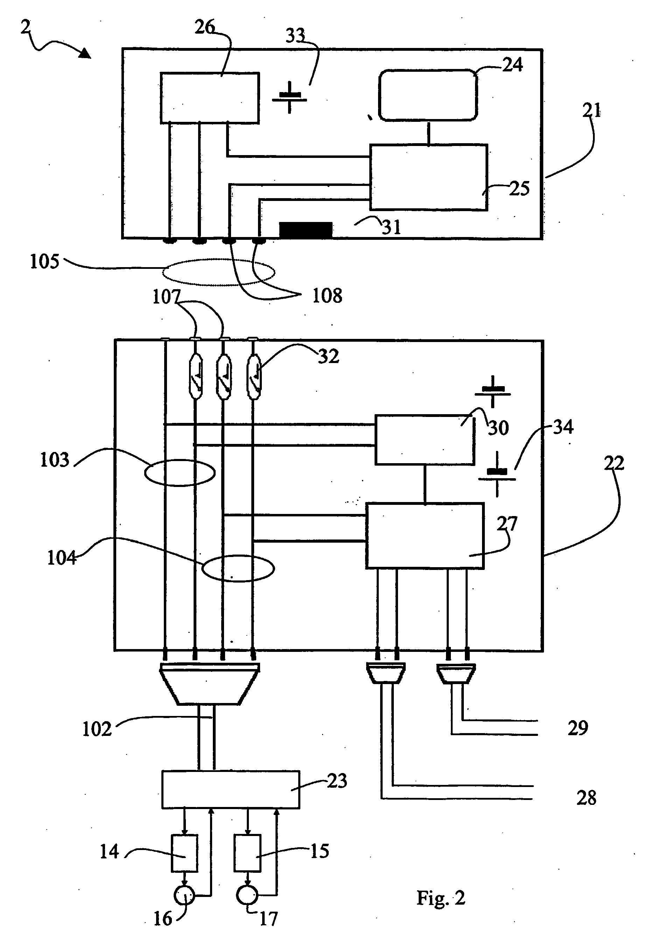

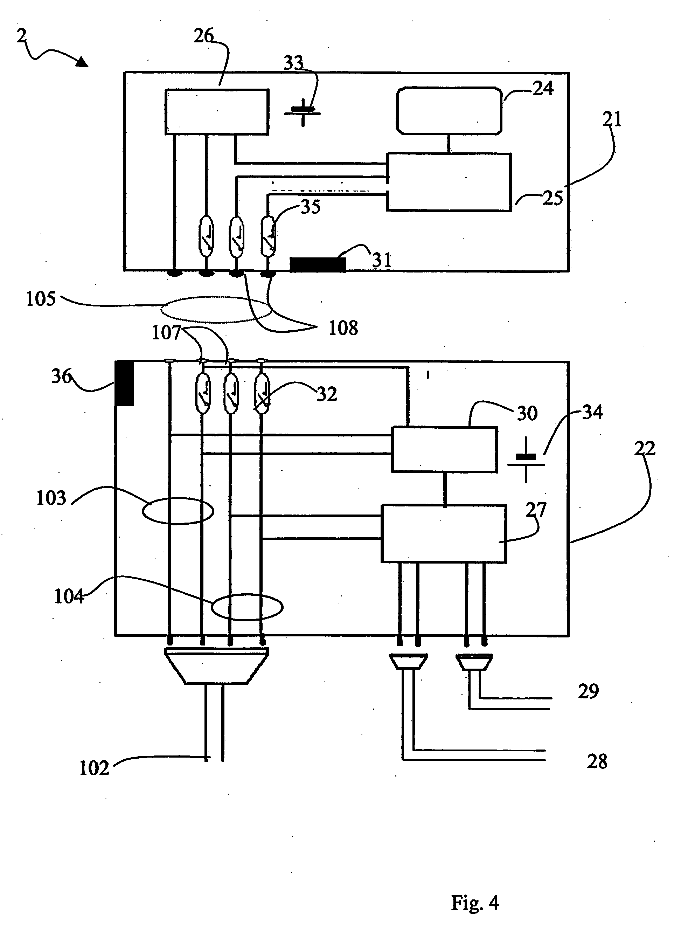

The connection 105 is realized by a suitable four-conductor male-female connector or else by sliding contacts, so as to have contacts 107 on the control unit 22 and corresponding contacts 108 on the display unit 21. Said contacts are represented schematically in Figures 2 and 4 only.

Connected in parallel on the communication bus 104 in the control unit 22, a microcontroller 27 is arranged, which is provided with inputs 28 and 29 for receiving respective controls corresponding to the gearshift and to the derailleur-shift. The microprocessor 27 thus provides for forwarding said commands, on the communication bus 104, to the power unit 23. The control unit 22 comprises an auxiliary supply circuit 30, which monitors, in a known way, operation of an auxiliary battery 34 for the microcontroller 27.

The display unit 21 comprises a display 24, driven by a microprocessor 25. The microprocessor 25 is designed for performing the cycle-computer functions and for communicating, by means of the communication bus 104, with the control unit 22.

An auxiliary supply circuit 26 monitors, in a known way, operation of an auxiliary battery 33 for the microcontroller 25.

The display unit 21 further comprises a magnet 31, which is located in the proximity of the connection 105, whilst three magnetic switches 32, of the reed-switch type, hence which are able to be activated for closure by the magnet 31, are placed on the communication bus 104 and on one of the conductors of the supply bus 103.

Consequently, when the display unit 21 is mounted on the cycle, the magnet 31 keeps the magnetic switches 32 closed.

Should the display unit 21 be removed, the magnet 31 mounted on it moves away from the magnetic switches 32. Said magnetic switches 32 open, electrically insulating the control unit 22 with respect to the distal ends 107 of the lines foreseen for connection to the display unit 21.

Consequently, the possible exposure of said distal ends 107 to the external environment and to external agents is not able to have any influence on the control unit 22 (or on the power unit 23) since the aforesaid distal ends 107 are physically separated and isolated from the units 22 and 23 mounted on the cycle.

This fact can be even better appreciated from Figure 2, which relates to the situation in which the display unit 21 has been removed and displaced with respect to the control unit 22 by a distance such that the magnet 31 no longer exerts its force on the magnetic switches 32, which are in an opening position.

In particular, even though the contacts 107 remain uncovered and exposed, the corresponding conductors which belong to the supply bus 103 and to the communication bus 104 cannot, for example, be shortcircuited by humidity that has condensed on top of the contacts 107. Said contacts 107 are in fact physically separated and isolated from the aforesaid conductors of the communication bus 104 and of the supply bus 103.

There is thus prevented any batteries discharging phenomena through the connection 105.

Likewise, any electrostatic charge transfer phenomena, through the connection 105, to the buses 103 and 104 and to the devices associated to them is prevented.

Figures 1 and 2 show three reed-bulb switches, such a switch not being foreseen on the fourth conductor.

In the example illustrated, said conductor is, in fact, the earth conductor of the supply bus 103, which is unlikely to be able to give rise to the adverse phenomena referred to previously, also because the three reed switches in any case prevent formation of a return line.

It is, however, clear that both of the conductors of the supply bus 103 may be provided with switches such as the switches 32.

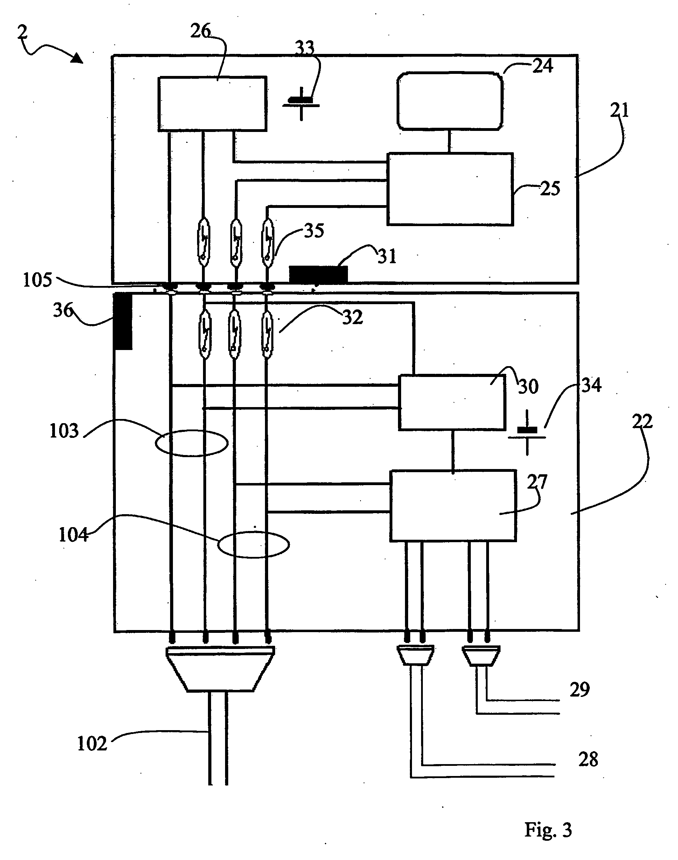

The variant embodiment illustrated in Figures 3 and 4 (corresponding, respectively, to Figures 1 and 2) in general terms adopts the same circuit scheme already described previously. For this reason, to indicate parts and elements that are identical or equivalent to the ones already described, the same references that already appear in Figures 1 and 2 have been adopted in Figures 3 and 4.

The variant embodiment illustrated in Figures 3 and 4 foresees the extending also to the contacts (distal ends) 108 of the connection 105, which are located on the display unit 21, the same mechanism of protection described previously with reference to the contacts 107, which are located on the control unit 22.

Also in this case, the mechanism of protection - based upon the physical isolation of the contacts 108 from the unit 21 and the components that are located inside it - foresees the presence of a plurality of switches 35.

This time the switches (again consisting preferably of reed bulbs) are, however, located on the display unit 21 so as to enable their operation by a magnet 36 placed on the control unit 22.

Consequently, when the display unit 21 is mounted on the cycle, the two units 21 and 22 are close to one another and, just as the magnet 31 keeps the switches 32 closed, the magnet 36 keeps the switches 35 closed. The connection 105 consequently presents an electrical continuity feature, fully performing its function.

Conversely, when the display unit 21 is removed from the cycle, the two units 21 and 22 are moved away. The magnet 31 is no longer able to keep the switches 32 closed, and the magnet 36 is no longer able to keep the switches 35 closed.

The switches 32 and 35 open, and the contacts 107 and 108, which have remained exposed as a result of removal of the display unit 21 and interruption of the connection 105, are thus physically isolated from the respective units.

As regards the choice of the number and arrangement of the switches 35, there basically apply the same considerations made in regard to the switches 32.

Of course, as it is schematically illustrated in Figures 3 and 4, the positions of installation of the magnets 31 and 36 are chosen in such a way that the magnets are not reciprocally affected and, in particular, so as to prevent the magnet 36 from keeping the contacts 32 stably closed, and/or the magnet 31 from keeping the contacts 35 stably closed.

The solution just described enables considerable advantages to be achieved as compared to the known solutions.

The system for controlling the operating functions of a cycle as proposed herein advantageously enables automatic insulation of the points of connection on the control unit and/or on the display unit to be achieved through an interruption of the physical continuity of the signals from and towards the outside of said units.

Advantageously, the insulation obtained by the system according to the invention does not prevent the control unit and the power unit from operating independently.

The use of magnetic switches in the form of reed-bulb switches is particularly advantageous on a cycle, since it is exposed to considerable vibrations. In addition, the magnet on the display unit and/or on the control unit is an inexpensive device that does not require any sort of supply.

However, it is clear that the reed-bulb switches may be replaced by other equivalent magnetic or electromechanical devices, such as other types of mobile-element relays or Hall-effect-sensor relays, or else by switches, in particular switches controlled by means of other types of signal, such as an optical signal or a radio-frequency signal, or other types of sensors or proximity devices designed for inducing switching of a remotely located switch.

It will in fact be appreciated that the magnetic switches set on the control unit 22 and/or display unit 21 and the magnet placed on the display unit 21 and/or control unit 22 realize a proximity switching device that is activated for switching when the display unit 21 is removed or else installed on the cycle. Such a device may be built in a functionally equivalent way in many different forms.

By way of example (and without wishing in any way to exhaust the field of possibilities), the following solutions may be cited:
- proximity switches of a mechanical type;
- proximity switches of the solid-state type, such as photoemitter-photodetector pairs;
- optical switches, such as photocells or photodetectors in general, which are able to be exposed or obscured according to whether the display unit 21 is removed or else mounted on the cycle;
- electromagnetic-field or ultrasound proximity sensors.

The control system may foresee that the control unit 22 will detect opening of the switches caused by removal of the display unit 21 and will intervene for inhibiting, in said conditions, operation of the system itself. Alternatively, the control unit 22 may be configured for detecting opening of the magnetic switches and implementing a set of basic locomotion functions, such as gear-shifting and derailleur-shifting, ensuring execution thereof in conditions of removal of the display unit from the cycle.

From what has been set forth above, it follows that, without prejudice to the principle of the invention, the details of implementation and embodiments may vary widely with respect to what is described and illustrated herein, without thereby departing from the scope of the present invention, as defined by the annexed claims.

## Claims

1. A system (2) attachable to a cycle for controlling the operating functions of the cycle, comprising a unit (22) and at least one complementary unit (21) connected by means of at least one electrical connection (105); said one complementary unit (21) being configured for being selectively removable from the cycle, so that said at least one electrical connection (105) is an electrical connection which can be decoupled leaving exposed on said units (22, 21) at least one distal contact part (107, 108), **characterized in that** at least one of said unit (22) and said complementary unit (21) comprises at least one switch (32, 35) across a respective non earth conductor of said at least one electrical connection (105), which can be selectively actuated by an actuation element (31, 36) for electrically insulating said exposed distal contact part (167, 108) from said at least one of said unit (22) and said complementary unit (21), and **in that** said actuation element (31, 36) is wholly comprised in the respective otter (5) of said unit (22) and said complementary unit (21).

2. The system (2) according to Claim 1, **characterized in that** said at least one switch (32, 35) can be operated according to the proximity of said complementary unit (22) to said unit (21).

3. The system (2) according to Claim 1 or 2, **characterized in that** said at least one switch (32, 35) electrically connects said at least one of said unit (22) and said complementary unit (21) to said distal contact part (107, 108) when said unit (22) and said complementary unit (21) are near to one another.

4. The system (2) according to any one of the previous claims, **characterized in that** said at least one electrical connection (105) is a multiwire electrical connection and said at least one switch (32, 35) comprises a plurality of switches (32, 35), across each non earth conductor of said at least one electrical connection (105).

5. The system (2) according to any of the previous claims, **characterized in that** said at least one of said unit (22) and said complementary unit (21) further comprises a switch (32, 35) associated to a earth conductor of said at least one electrical connection (105).

6. The system (2) according to any one of the previous claims, **characterized in that** said electrical connection (105) is inserted in at least one bus (103, 104).

7. The system (2) according to any one of the previous claims, **characterized in that** said at least one switch (32, 35) is a reed switch and said actuation element (31, 36) is a magnet (31, 36).

8. The system (2) according to Claim 1 or 7, **characterized in that** said at least one switch (32, 35) is mounted in a position such that, with said unit (22) and said complementary unit (21) co-operating together, it is exposed to said respective other(s) of said unit (22) and complementary unit (21) so that it can be operated by said actuation element (31, 36), which is placed on said respective other(s) of said unit (22) and said complementary unit (21).

9. The system (2) according to any one of the previous claims, **characterized in that** both said unit (22) and said complementary unit (21) comprise said at least one switch (32, 35) and said actuation element (31, 36), wherein said actuation elements (36, 31) are positioned so as not to interfere with each other.

10. The system (2) according to any one of the previous claims, **characterized in that** said complementary unit (21) is configured as a display unit (21).

11. The system (2) according to any one of the previous claims, **characterized in that** said complementary unit (21) comprises an auxiliary battery (33) as power supply means and is capable of independent operation.

12. The system (2) according to any one of the previous claims, **characterized in that** said unit (22) comprises an auxiliary battery (34) as power supply means and is capable of independent operation.

## Patentansprüche

1. System (2), das an einem Fahrrad angebracht werden kann, um die Betriebsfunktionen des Fahrrades zu steuern, wobei es eine Einheit (22) und wenigstens eine komplementäre Einheit (21) umfasst, die mittels wenigstens einer elektrischen Verbindung (105) verbunden sind, die komplementäre Einheit (21) so konfiguriert ist, dass sie selektiv von dem Fahrrad entfernt werden kann und die wenigstens eine elektrische Verbindung (105) eine elektrische Verbindung ist, die getrennt werden kann und an den Einheiten (22, 21) wenigstens einen vorderen Kontaktteil (107, 108) freilegt,
**dadurch gekennzeichnet, dass**
wenigstens eine von der Einheit (22) und der komplementären Einheit (21) wenigstens einen Schalter (32, 35) über einen jeweiligen Nicht-Erdleiter der wenigstens einen elektrischen Verbindung (105) umfasst, der selektiv mittels eines Betätigungselementes (31, 36) betätigt werden kann, um den freiliegenden vorderen Kontaktteil (107, 108) elektrisch gegenüber der wenigstens einen von der Einheit (22) und der komplementären Einheit (21) zu isolieren, und dass das Betätigungselement (31, 36) vollständig in der jeweiligen anderen von der Einheit (22) und der komplementären Einheit (21) enthalten ist.

2. System (2) nach Anspruch 1,
**dadurch gekennzeichnet, dass**
der wenigstens eine Schalter (32, 35) entsprechend der Nähe der komplementären Einheit (22) zu der Einheit (21) betrieben werden kann.

3. System (2) nach Anspruch 1 oder 2,
**dadurch gekennzeichnet, dass**
der wenigstens eine Schalter (32, 35) die wenigstens eine von der Einheit (22) und der komplementären Einheit (21) elektrisch mit dem vorderen Kontaktteil (107, 108) verbindet, wenn die Einheit (22) und die komplementäre Einheit (21) nahe beieinander sind.

4. System (2) nach einem der vorangehenden Ansprüche,
**dadurch gekennzeichnet, dass**
die wenigstens eine elektrische Verbindung (105) eine mehradrige elektrische Verbindung ist und der wenigstens eine Schalter (32, 35) eine Vielzahl von Schaltern (32, 35) über jeden Nicht-Erdleiter der wenigstens einen elektrischen Verbindung (105) umfasst.

5. System (2) nach einem der vorangehenden Ansprüche,
**dadurch gekennzeichnet, dass**
die wenigstens eine von der Einheit (22) und der komplementären Einheit (21) des Weiteren einen Schalter (32, 35) umfasst, der zu einem Erdleiter der wenigstens einen elektrischen Verbindung (105) gehört.

6. System (2) nach einem der vorangehenden Ansprüche,
**dadurch gekennzeichnet, dass**
die elektrische Verbindung (105) in wenigstens einen Bus (103, 104) eingeführt ist.

7. System (2) nach einem der vorangehenden Ansprüche,
**dadurch gekennzeichnet, dass**
der wenigstens eine Schalter (32, 35) ein Reed-Schalter ist und das Betätigungselement (31, 36) ein Magnet (31, 36) ist.

8. System (2) nach Anspruch 1 oder 7,
**dadurch gekennzeichnet, dass**
der wenigstens eine Schalter (32, 35) an einer Position angebracht ist, an der er, wenn die Einheit (22) und die komplementäre Einheit (21) zusammenwirken, zu der jeweiligen anderen von der Einheit (22) und der komplementären Einheit (21) hin freiliegt, so dass er durch das Betätigungselement (31, 36) betätigt werden kann, das an der jeweiligen anderen von der Einheit (22) und der komplementären Einheit (21) angeordnet ist.

9. System (2) nach einem der vorangehenden Ansprüche,
**dadurch gekennzeichnet, dass** "
sowohl die Einheit (22) als auch die komplementäre Einheit (21) wenigstens einen Schalter (32, 35) und das Betätigungselement (31, 36) umfassen, wobei die Betätigungselemente (36, 31) so positioniert sind, dass sie einander nicht stören.

10. System (2) nach einem der vorangehenden Ansprüche,
**dadurch gekennzeichnet, dass**
die komplementäre Einheit (21) als eine Anzeige-Einheit (21) konfiguriert ist.

11. System (2) nach einem der vorangehenden Ansprüche,
**dadurch gekennzeichnet, dass**
die komplementäre Einheit (21) eine Zusatzbatterie (33) als Stromversorgungseinrichtung umfasst und unabhängig betrieben werden kann.

12. System (2) nach einem der vorangehenden Ansprüche,
**dadurch gekennzeichnet, dass**
die Einheit (22) eine Zusatzbatterie (34) als Stromversorgungseinrichtung umfasst und unabhängig betrieben werden kann.

## Revendications

1. Système (2) pouvant être fixé à une bicyclette pour contrôler les fonctions de fonctionnement de la bicyclette, comprenant une unité (22) et au moins une unité complémentaire (21) reliée au moyen d'au moins une connexion électrique (105) ; ladite unité complémentaire (21) étant configurée pour pouvoir être retirée de manière sélective de la bicyclette, de sorte que ladite au moins une connexion électrique (105) soit une connexion électrique pouvant être découplée en laissant au moins une partie de contact distal (107, 108) exposée sur lesdites unités (22, 21), **caractérisé en ce qu'**au moins l'une de ladite unité (22) et de ladite unité complémentaire (21) comprend au moins un commutateur (32, 35) à travers un conducteur non mis à la terre respectif de ladite au moins une connexion électrique (105), qui peut être actionné de manière sélective par un élément d'actionnement (31, 36) pour isoler électriquement ladite partie de contact distal exposée (107, 108) de ladite au moins une de ladite unité (22) et de ladite unité complémentaire (21), et **en ce que** ledit élément d'actionnement (31, 36) est entièrement compris dans la ou les autres unités respectives de ladite unité (22) et de ladite unité complémentaire (21).

2. Système (2) selon la revendication 1, **caractérisé en ce que** ledit au moins un commutateur (32, 35) peut être actionné selon la proximité de ladite unité complémentaire (22) par rapport à ladite unité (21).

3. Système (2) selon la revendication 1 ou 2, **caractérisé en ce que** ledit au moins un commutateur (32, 35) relie électriquement ladite au moins une unité (22) et la dite unité complémentaire (21) à ladite partie de contact distal (107, 108) lorsque ladite unité (22) et ladite unité complémentaire (21) sont proches l'une de l'autre.

4. Système (2) selon l'une quelconque des revendications précédentes, **caractérisé en ce que** ladite au moins une connexion électrique (105) est une connexion électrique multipolaire et ledit au moins un commutateur (32, 35) comprend une pluralité de commutateurs (32, 35), à travers chaque conducteur non mis à la terre de ladite au moins une connexion électrique (105).

5. Système (2) selon l'une quelconque des revendications précédentes, **caractérisé en ce que** ladite au moins une unité de ladite unité (22) et de ladite unité complémentaire (21) comprend en outre un commutateur (32, 35) associé à un conducteur de terre de ladite au moins une connexion électrique (105).

6. Système (2) selon l'une quelconque des revendications précédentes, **caractérisé en ce que** ladite connexion électrique (105) est insérée dans au moins un bus (103, 104).

7. Système (2) selon l'une quelconque des revendications précédentes, **caractérisé en ce que** ledit au moins un commutateur (32, 35) est un commutateur à lames et ledit élément d'actionnement (31, 36) est un aimant (31, 36).

8. Système (2) selon la revendication 1 ou 7, **caractérisé en ce que** ledit au moins un commutateur (32, 35) est monté dans une position telle que, avec ladite unité (22) et ladite unité complémentaire (21) coopérant ensemble, il est exposé à ladite ou lesdites autres unités respectives de ladite unité (22) et de ladite unité complémentaire (21) de manière à pouvoir être actionné par ledit élément d'actionnement (31, 36) qui est placé sur la ou les autres unités respectives de ladite unité (22) et de la dite unité complémentaire (21).

9. Système (2) selon l'une quelconque des revendications précédentes, **caractérisé en ce que** ladite unité (22) et ladite complémentaire (21) comprennent toutes deux ledit au moins un commutateur (32, 35) et ledit élément d'actionnement (31, 36), les éléments d'actionnement (36, 31) étant positionnés de manière à ne pas interférer les uns avec les autres.

10. Système (2) selon l'une quelconque des revendications précédentes, **caractérisé en ce que** ladite unité complémentaire (21) est configurée en tant qu'unité d'affichage (21).

11. Système (2) selon l'une quelconque des revendications précédentes, **caractérisé en ce que** ladite unité complémentaire (21) comprend une batterie auxiliaire (33) en tant que moyen d'alimentation et peut fonctionner de manière indépendante.

12. Système (2) selon l'une quelconque des revendications précédentes, **caractérisé en ce que** ladite unité (22) comprend une batterie auxiliaire (34) en tant que moyen d'alimentation et peut fonctionner de manière indépendante.
